(19) Europäisches Patentamt
European Patent Office
Office européen des brevets

(11) EP 1 399 490 B1

(12) # EUROPÄISCHE PATENTSCHRIFT

(45) Veröffentlichungstag und Bekanntmachung des Hinweises auf die Patenterteilung:
**03.05.2006 Patentblatt 2006/18**

(21) Anmeldenummer: **02735360.6**

(22) Anmeldetag: **14.05.2002**

(51) Int Cl.:
***C08F 8/32*** *(2006.01)* ***C08F 8/46*** *(2006.01)*
***C10L 1/22*** *(2006.01)* ***C10M 149/06*** *(2006.01)*
***C10N 30/00*** *(2006.01)*

(86) Internationale Anmeldenummer:
**PCT/EP2002/005295**

(87) Internationale Veröffentlichungsnummer:
**WO 2002/092645 (21.11.2002 Gazette 2002/47)**

(54) **VERFAHREN ZUR HERSTELLUNG VON POLYISOBUTENYLSUCCINIMIDPRODUKTEN, POLYISOBUTENYLSUCCINIMIDPRODUKTE MIT VERBESSERTEN EIGENSCHAFTEN, ZWISCHENPRODUKTE UND VERWENDUNGEN**

METHOD OF PRODUCING POLYISOBUTENYLSUCCINIMIDE PRODUCTS, POLYISOBUTENYLSUCCINIMIDE PRODUCTS WITH IMPROVED PROPERTIES, INTERMEDIATE PRODUCTS AND THE USE THEREOF

PROCEDE DE PRODUCTION DE PRODUITS DE POLYISOBUTENYLSUCCINIMIDE, PRODUITS DE POLYISOBUTENYLSUCCINIMIDE PRESENTANT DES PROPRIETES AMELIOREES, PRODUITS INTERMEDIAIRES ET UTILISATIONS DE CES PRODUITS

(84) Benannte Vertragsstaaten:
**AT BE CH CY DE DK ES FI FR GB GR IE IT LI LU MC NL PT SE TR**

(30) Priorität: **15.05.2001 DE 10123553**

(43) Veröffentlichungstag der Anmeldung:
**24.03.2004 Patentblatt 2004/13**

(73) Patentinhaber: **BASF Aktiengesellschaft**
**67056 Ludwigshafen (DE)**

(72) Erfinder:
- **HÜFFER, Stephan**
**67063 Ludwigshafen (DE)**
- **SCHWAB, Peter**
**67098 Bad Dürkheim (DE)**
- **FISCHER, Klaus**
**67434 Neustadt (DE)**
- **BERG, Thomas**
**67071 Ludwigshafen (DE)**
- **MACH, Helmut**
**69115 Heidelberg (DE)**

(74) Vertreter: **Pohl, Michael Friedrich et al**
**Reitstötter, Kinzebach & Partner (GbR),**
**Patentanwälte,**
**Ludwigsplatz 4**
**67059 Ludwigshafen (DE)**

(56) Entgegenhaltungen:
**EP-A- 0 658 572** **WO-A-98/42808**
**US-A- 4 171 273**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 399 490 B1

## Beschreibung

Die Erfindung betrifft ein Verfahren zur Herstellung von Polyisobutenylsuccinimidprodukten, Polyisobutenylsuccinimidprodukte mit verbesserten Eigenschaften, Polyisobutenylbernsteinsäurehalbester-Zwischenprodukte und deren Verwendung im erfindungsgemäßen Verfahren zur Herstellung von Polyisobutenylsuccinimidprodukten, ein Verfahren zur Herstellung der Zwischenprodukte, sowie die Verwendung der Polyisobutenylsuccinimidprodukte als Additive für Kraftstoffe oder Schmiermittel.

Die Herstellung von Polyalkenylsuccinimid, beispielsweise Polyisobutenylsuccinimid, aus einem Polyolefin, z. B. Polyisobuten und Maleinsäureanhydrid unter Bildung von Polyalkenylbernsteinsäureanhydrid, z. B. Polyisobutenylbernsteinsäureanhydrid und anschließende Imidierung ist im Stand der Technik beschrieben, vgl. beispielsweise EP-A-264247 oder EP-A-271937. So beschreibt die EP-A-264247 auf Seite 4 die Umsetzung von Maleinsäureanhydrid mit einem Olefinpolymer, beispielsweise Polyisobuten durch Erhitzen in einer sog. "en"-Reaktion unter Bildung von Polyisobutenylbernsteinsäureanhydrid, das dann mit einem Polyamin zum entsprechenden Polyisobutenylsuccinimid umgesetzt werden kann (vgl. auch Beispiel 1 der Druckschrift).

In der EP-A-271937 ist die Herstellung von Polyolefin-substituierten Succinimiden, insbesondere von Polyisobuten-substituierten Succinimiden, beschrieben. Hierbei setzt man das Polyalken oder ein halogeniertes Polyalken mit Maleinsäureanhydrid bei einer Temperatur von 140 bis 220 °C, vorzugsweise in Gegenwart von Chlor, um und lässt dann das erhaltene Produkt mit einem Polyamin reagieren.

Die nach dem genannten Stand der Technik beschriebenen Reaktionen erfolgen allgemein nach dem folgenden Reaktionsschema, dargestellt am Beispiel des Polyisobutenylsuccinimids.

Reaktionsschema:

Synthese von Polisobutenylsuccinimid (PIBSI) gemäß Stand der Technik, vgl. EP-A-264247

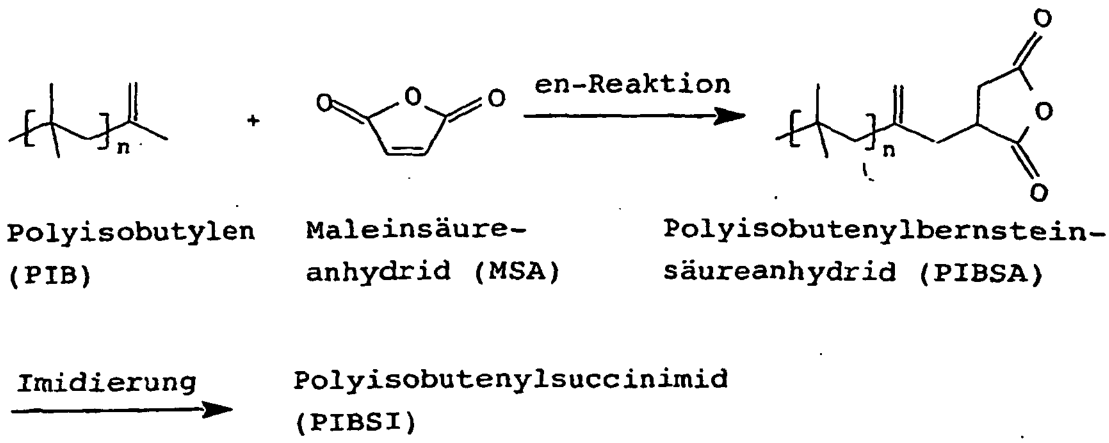


Polyisobutylen (PIB)

Maleinsäure-anhydrid (MSA)

Polyisobutenylbernstein-säureanhydrid (PIBSA)

Polyisobutenylsuccinimid (PIBSI)

Die im Stand der Technik beschriebenen Polyalkenylsuccinimide finden, üblicherweise in Kombination mit anderen Additiven, mannigfache Anwendung in Kraftstoffen und Schmiermitteln, vgl. beispielsweise EP-A-264247, Seiten 8/9, EP-A-271937 und WO 98/42808, um nur beispielhaft einige zu nennen.

So beschreibt die WO 98/42808 den Einsatz eines Reaktionsprodukts aus einem Polyalkenylderivat einer monoethylenisch ungesättigten $C_4$-$C_{10}$-Dicarbonsäure mit einem Polyamin als Dispersantadditiv für schwefelarme Dieselkraftstoffe. Hierbei kann es sich um Reaktionsprodukte aus Polyisobutenylbernsteinsäureanhydrid und Polyaminen handeln.

Die EP-A-839840 schlägt Succinimidverbindungen aus einer mit einer Alkenyl- oder Alkylgruppe als Seitenkette versehenen Bernsteinsäure oder dem entsprechenden Anhydrid und einem Polyamin vor. Diese Verbindungen sollen als Schmiermitteladditiv der Korrosion von Dieselkraftstoffen mit erhöhtem Schwefelgehalt entgegenwirken. Bei der Seitenkette kann es sich beispielsweise um ein Polyisobuten handeln. Die Umsetzung der Säurekomponente mit dem Polyamin erfolgt im molaren Verhältnis von Säurekomponente:Polyamin von 2,0 oder mehr.

Charakterisiert werden die Succinimidverbindungen durch zwei Infrarotabsorptionsbanden, einen $\alpha$-Peak bei 1640 $\pm$ 10 $cm^{-1}$ und einem $\beta$-Peak bei 1700 $\pm$ 10 $cm^{-1}$ mit einem Intensitätsverhältnis von $\alpha$-Peak:$\beta$-Peak von 0,12 oder mehr. Da bekanntlich z. B. die Lage der Infrarotabsorptionsbanden und insbesondere deren relative Intensitäten

stark von den Messbedingungen abhängen und die Druckschrift hierzu keine Angaben macht, ist allerdings nicht festzustellen, um welche Produkte es sich in dieser Druckschrift handelt.

Die Literatur beschreibt auch die Herstellung von Polyalkenlysuccinimiden, beispielsweise Polyisobutensuccinimiden und anderen, nachbehandelten Additiven für Schmieröle und Kraftstoffe, ausgehend von Olefinen und ungesättigten Säurekomponenten, beispielsweise Maleinsäureanhydrid oder funktionellen Säurederivaten, bei der die an den Carbonylfunktionen sitzenden Reste die Bedeutung OH, Cl oder O-Niedrigalkyl besitzen können, vgl. EP-A-657475. Der Schwerpunkt dieser Druckschrift liegt aber ersichtlich auf der Verwendung des Anhydrids, zumal sämtliche Beispiele den Einsatz von Maleinsäureanhydrid bei der Umsetzung mit dem Polyolefin beschreiben.

Dasselbe gilt für die Lehren der EP-A-441014 und EP-A-587331, bei denen sich die Beispiele ebenfalls auf den Einsatz von Maleinsäureanhydrid beschränken.

Keine der Druckschriften nennt konkret Halbester von Polyisobutenylbernsteinsäure.

Die US-A-5279626 beschreibt Kraftstoffadditive, welche Reaktionsprodukte von Polyaminen mit Hydrocarbylsubstituierten Bernsteinsäure-Acylierüngsmitteln enthalten können. Diese umfassen zum Beispiel das Anhydrid, Säurehalogenide und Ester (Spalte 5). Über Halbester wird in der Druckschrift nichts ausgeführt. Allerdings empfiehlt die US-A-5279626 (vgl. Spalte 6) den zusätzlichen Einsatz von Korrosionsinhibitoren, unter anderem auch Halbester von Alkenylbernsteinsäuren mit 8 bis 24 Kohlenstoffatomen in der Alkenylgruppe mit Alkoholen, wie Polyglykolen.

Im Zuge der vorliegenden Erfindung wurde festgestellt, dass bei der Herstellung von Polyisobutenylsuccinimid unerwartet bei der Stufe der Umsetzung von Polyalkenylbernsteinsäureanhydrid, insbesondere Polyisobutenylbernsteinsäureanhydrid, mit einem Oligo- oder Polyamin vorübergehend eine starke Volumenzunahme im Reaktor auftritt. Diese beruht einerseits auf der Abspaltung von Wasser bzw. Wasserdampf und andererseits auf einer offensichtlich starken intermediären Viskositätszunahme, die bei der Vereinigung des Polyalkenylbernsteinsäureanhydrids, insbesondere Polyisobutenylbernsteinsäureanhydrids, mit der Oligo- oder Polyaminkomponente auftritt. Diese Volumenzunahme stellt den limitierenden Faktor bei der Festlegung der Chargengröße in einer bestehenden Anlage dar. Nach den Beobachtungen der Anmelderin aufgrund dieser Erscheinung kann der Füllgrad einer Anlage in der Regel bei lediglich 60 % des theoretischen Füllgrades liegen. Das bedeutet, dass zur Erzielung bestimmter Chargengrößen Produktionsanlagen benötigt werden, welche wegen der Schäumung des Eduktgemisches eine wesentlich größere Kapazität aufweisen müssen, als dies ohne das Auftreten des Schäumungsphänomens erforderlich wäre.

Der Erfindung liegt die Aufgabe zugrunde, das bekannte Verfahren zur Herstellung von Polyisobutenylsuccinimid durch Umsetzung eines Pölyolefins, z. B. von Polyisobuten mit Maleinsäure, Maleinsäureanhydrid oder zu den funktionellen Derivaten davon Polyalkenylsuccinanhydrid, insbesondere Polyisobutenylsuccinanhydrid, und anschließende Reaktion des Polyalkenylsuccinanhydrids, insbesondere Polyisobutenylsuccinanhydrids, mit einem Oligo- oder Polyamin so zu verbessern, dass die Schäumung des Eduktgemisches aus Polyalkenylsuccinanhydrid, insbesondere Polyisobutenylsuccinanhydrid und dem Oligo- oder Polyamin verhindert oder zumindest stark gemindert wird. Es versteht sich von selbst, dass das zur Herstellung von Polyalkenylsuccinanhydrids eingesetzte Polyolefin terminale Doppelbindungen aufweist, die mit dem Maleinsäureanhydrid eine en-Reaktion eingehen können, insbesondere Doppelbindungen mit Vinylifenstruktur. Der Gehalt an terminalen Doppelbindungen in dem Polyolefin beträgt daher in der Regel wenigstens 50 mol-% und insbesondere wenigstens 75 mol-% (bestimmt mittels $^{1}$H-NMR-Spektroskopie ggf. in Kombination mit $^{13}$C-NMR-Spektroskopie in an sich bekannter weise).

Diese Aufgabe wird gelöst mit einem Verfahren der genannten Art, das dadurch gekennzeichnet ist, dass man Polyisobutenylsuccinanhydrid, entweder

(a) zuerst mit einem Alkohol oder Phenol und ohne Isolierung des Reaktionsprodukts anschließend mit dem Oligo- oder Polyamin umsetzt, oder

(b) das Polyisobutenylsuccinanhydrid in Gegenwart eines Alkohols oder Phenols mit dem Oligo- oder Polyamin umsetzt und

(c) gewünschtenfalls anschließend den Alkohol oder das Phenol entfernt.

Überraschenderweise unterbleibt beim erfindungsgemäßen Verfahren die Schäumung des Eduktgemisches, so dass man bei gleicher Chargengröße mit Reaktorvolumina auskommt, die deutlich geringer als die bislang erforderlichen sind. Der Füllgrad eine Anlage kann nach dem erfindungsgemäßen Verfahren auf 85 % und mehr des maximalen Füllvolumens, abhängig von der gewählten Reaktionstemperatur, angehoben werden. Hierdurch wird die Wirtschaftlichkeit des Verfahrens nachhaltig gesteigert.

Das erfindungsgemäße Verfahren umfasst zwei Varianten: Man kann entweder das gebildete Polyisobutenylsuccinanhydrid zuerst mit dem Alkohol oder Phenol zur Umsetzung bringen und anschließend das Reaktionsprodukt ohne Isolierung, d. h. in situ oder unmittelbar mit dem Oligo- oder Polyamin umsetzen. Dies kann so erfolgen, dass man das Polyisobutenylsuccinanhydrid mit dem Alkohol oder Phenol in Kontakt bringt, die Reaktion ablaufen lässt und dann

das Oligo- oder Polyamin in den Reaktionsraum einbringt. Eine Isolierung des intermediär gebildeten Halbesters ist nicht erforderlich. Alternativ kann man das Polyisobutenylsuccinanhydrid in Gegenwart des Alkohols oder Phenols mit dem Oligo- oder Polyamin umsetzen.

Im Anschluss an die Reaktion kann der Alkohol bzw. das Phenol gewünschtenfalls auf übliche Weise entfernt werden. Dies ist jedoch nicht zwingend und kann auch vorteilhaft unterbleiben.

Die Reaktion des Polyisobutenylsuccinanhydrids mit dem Alkohol oder Phenol erfolgt zweckmäßig bei erhöhten Temperaturen, vorzugsweise bei 50 bis 180 °C, insbesondere bei 80 bis 160 °C.

Das erfindungsgemäße Verfahren löst nicht nur in überraschenderweise das Problem der Schäumung des Eduktgemisches. Die gebildenten Polyalkenylsuccinimidprodukte unterscheiden sich auch in ihren Eigenschaften von den Polyalkenylsuccinimiden des Standes der Technik. Der nach den bekannten Verfahren des Standes der Technik stets anfallende, relativ hohe Anteil an entsprechenden Amiden wird wesentlich reduziert. Außerdem enthalten die erfindungsgemäßen Polyalkenylsuccinimidprodukte keine Esteranteile, obgleich intermediär die Umsetzung mit dem Alkohol oder Phenol durchgeführt wurde.

Die erfindungsgemäß erhaltenen Polyalkenylsuccinimidprodukte, insbesondere die erfindungsgemäß erhältlichen Polyisobutenylsuccinimide, weisen nicht nur eine andere Zusammensetzung als die Polyisobutenylsuccinimide des Standes der Technik auf, sie besitzen auch überraschenderweise im Vergleich zu den bekannten Produkten überlegene Eigenschaften. So ist die Dispergatorwirkung wesentlich verbessert. Dies äußert sich im Falle der Anwendung im Kraftstoff durch eine geringere Verkokung der Einspritz-/Brennerdüsen. Auch bei der Verwendung der erfindungsgemäßen Polyalkenylsuccinimidprodukte, insbesondere der Polyisobutenylsuccinimidprodukte als Additive für Schmiermittel zeigt sich eine deutliche Verbesserung der Dispergatorwirkung. Weiterhin sind die erfindungsgemäßen Polyalkenylsuccinimidprodukte, insbesondere die Polyisobutenylsuccinimidprodukte besonders wirksam beim Schutz vor Korrosion und Verschleiß.

Demnach ist ein weiterer Gegenstand der Erfindung die Bereitstellung neuer Polyisobutenylsuccinimidprodukte mit überlegenen Eigenschaften.

Die erfindungsgemäßen Polyisobutenylsuccinimidprodukte sind erhältlich durch ein Verfahren, bei dem man ein Polyisobuten, das terminale Doppelbindungen aufweist, mit Maleinsäure, Maleinsäureanhydrid oder einem funktionellen Derivat davon zu Polyalkenylsuccinanhydrid umsetzt und anschließend das Polyalkenylsuccinanhydrid oder ein funktionelles Derivat davon mit einem Oligo- oder Polyamin zur Reaktion bringt, wobei man das Polyalkenylsuccinanhydrid oder sein funktionelles Derivat entweder

(a) zuerst mit einem Alkohol oder Phenol und anschließend ohne Isolierung des Reaktionsprodukts mit dem Oligo- oder Polyamin umsetzt, oder

(b) das Polyalkenylsuccinanhydrid oder sein funktionelles Derivat in Gegenwart eines Alkohols oder Phenols mit dem Oligo- oder Polyamin umsetzt und

(c) gewünschtenfalls anschließend den Alkohol oder das Phenol entfernt.

Die erfindungsgemäßen Polyalkenylsuccinimidprodukte aus Polyalkenylsuccinanhydrid oder einem funktionellen Derivat davon und einem Oligo- oder Polyamin weisen einen Anteil von nicht mehr als 30 Gew.-t des entsprechenden Polyalkenylsuccinamids bzw. Polyalkenylsuccinhalbamids auf, bezogen auf das Gesamtgewicht des Produktgemischs. Vorzugsweise beträgt der Anteil des entsprechenden Polyalkenylsuccinamids bzw. -halbamids nicht mehr als 25 Gew.-%, bezogen auf das Gesamtgewicht des Produkts.

Die quantitative Bestimmung des Anteils an Polyalkenylsuccinamid bzw. Polyalkenylsuccinhalbamid bzw. Polyalkenylsuccinimid im erfindungsgemäßen Produkt erfolgt nach der nachstehend erläuterten IR-Methode:

Eine quantitative Bestimmung von Imid- und Amid-Substituenten in den erfindungsgemäßen Polyalkenylderivaten kann z. B. anhand der IR-Banden erfolgen. Diese liegen bei den gewählten apparativen und experimentellen Bedingungen bei 1703 $cm^{-1}$ (Imid), 1666 $cm^{-1}$ (Amid) und der Referenzbande für Polyisobutylen bei 1367 $cm^{-1}$.

Als Spektrometer wurde ein Nicolet Magna 550 verwendet (Messparameter: Auflösung 4 $cm^{-1}$). Die Probe wurde zur Vermessung als dünner Film auf ein KBr-Fenster aufgetragen.

Auswertung:

Die Bestimmung der Extinktion (Bandenhöhe) bei den oben genannten Wellenzahlen erfolgt mit Hilfe eine Basislinie mit den Stützpunkten 1807 $cm^{-1}$ und 1045 $cm^{-1}$. Durch Quotientenbildung Extinktion (1666 $cm^{-1}$) / Extinktion (1703 $cm^{-1}$) lässt sich lediglich ein relatives Amid-/Imid-Verhältnis angeben, da die Amid- und Imid-Banden bei gleicher Konzentration nicht die gleiche Intensität besitzen (unterschiedliche Oszillatorstärke bzw. Anregungswahrscheinlichkeit von Imid- und Amid-Schwingung).

Anhand zweier Proben mit unterschiedlichem Imid-/Amid-Verhältnis ist es durch Spektrensubstraktion möglich, Spektren zu erhalten, welche nur noch entweder die Imid- oder die Amid-Bande plus die dem Substituenten zugehörenden Isobutylen-Gruppen enthalten. Dabei wird das 2. Spektrum derart gewichtet, dass die Bande des jeweils anderen Substituenten kompensiert (Nulllinie) wird. Dadurch erhält man ein "künstliches" Polyisobutylen(PIB)-Amid- bzw. PIB-Imid-Spektrum. Eventuell in der Probe enthaltene "freie" unsubstituierte PIB-Anteile bringen in diesen "künstlichen" Spektren zusätzliche Absorptionen an der Referenzbande für PIB bei 1367 $cm^{-1}$. Zieht man nun z. B. das so gewonnene Imid-Spektrum (plus der genannten freien PIB-Gruppen) von einem (Original-)-Proben-Spektrum ab, so enthält dieses nur noch die Schwingungsbanden, die zum Amid-substituierten PIB gehören. Um den Spektrenanteil des Imid-substituierten zu erhalten, muss entsprechend das "künstliche" PIB-Amid-Spektrum vom Probenspektrum abgezogen werden.

Bei den so gewonnenen Spektrenanteilen des Amid- bzw. Imid-substituierten PIB können nun durch Bandenauswertung die Verhältnisse

$$V1 = \text{Extinktion (Amidbande)} / \text{Extinktion (Polyisobutylen)}$$

und

$$V2 = \text{Extinktion (Imidbande)} / \text{Extinktion (Polyisobutylen)}$$

bestimmt werden. Synthesebedingt besitzen sowohl das Amid- als auch das Imid-substituierte PIB dieselbe Kettenlänge (20 Isobutylen-Einheiten), so dass bei einer Normierung der Amid- bzw. Imid-substituierten PIB-Spektren auf die 1367 $cm^{-1}$-Bande, das Extinktionsverhältnis E(1703 $cm^{-1}$) / E(1666 $cm^{-1}$) wiedergibt, um welchen Faktor die Imid-Gruppe intensiver als die Amid-Gruppe IR-spektroskopisch nachgewiesen wird. Das Gleiche erhält man rechnerisch, wenn man V2 durch V1 dividiert.

Anhand von repräsentativen Proben wurde dieser (Nachweis-)Faktor zu F(I/A)=1,23 ermittelt. Dieser Wert bedeutet, dass bei gleicher Konzentration die Imid-Bande um ca. 23 % höher ist als die Amid-Bande. Multipliziert man nun das anfangs erwähnte relative Amid-/Imid-Verhältnis mit diesem Faktor, so erhält man das absolute Verhältnis dieser beiden funktionellen Gruppen in der zu analysierenden Probe:

$$\text{Amid-/Imid-Verhältnis} = V = 1{,}23 * \text{Extinktion } (1666\ cm^{-1}) / \text{Extinktion } (1703\ cm^{-1}) \quad (1)$$

Aus dem Amid-/Imid-Verhältnis V = A / I gemäß Formel (1) kann nun der jeweilige Amid- bzw. Imidanteil berechnet werden:

Es gilt

$$A + I = 1 \quad (2)$$

Aus (1) und (2)

$$\Rightarrow \quad A + A/V = 1$$

$$\Leftrightarrow \quad A(1 + 1/V) = 1$$

$$\text{Amidanteil} \quad A = V/(1+V) \quad (3)$$

bzw.

$$\text{Imidanteil} \qquad I = V/(1+V) \qquad (4)$$

Tabelle I: Bestimmung der Amid-Nebenkomponente

| | Alkohol | Verhältnis PIBSA[1)]/ROH | Amin | Verhältnis PIBSA/Amin | Amid-Anteil* [%] |
|---|---|---|---|---|---|
| Ansatz 1 | - | - | TETA[2)] | 1,0 | 40,4 |
| Ansatz 2 | - | - | TEPA[3)] | 1,0 | 37,2 |
| Ansatz 3 | n-Butanol | 0,5 | TEPA | 1,0 | 27,3 |
| Ansatz 4 | 2-Ethylhexanol | 1 | TEPA | 1,0 | 21,0 |
| Ansatz 5 | Isopropanol | 1 | TETA | 1,0 | 24,1 |
| Ansatz 6 | 2-Ethylhexanol | 0,5 | TETA | 1,0 | 16,8 |

* gemäß obigem IR-spektroskopischen Verfahren
1) PIBSA = Polyisobutylenamin
2) TETA = Tetraethylenpentamin
3) TEPA = Triethylenpentamin

Besonders bevorzugte erfindungsgemäße Polyisobutenylsuccinimidprodukte sind solche aus

(i) Polyisobuten mit einem zahlengemittelten Molekulargewicht $M_n$ von 500 bis 10000 Dalton und einem Gehalt an endständigen Doppelbindungen von mehr als 50 Mol-%, vorzugsweise mehr als 75 Mol-%,

(ii) Maleinsäureanhydrid und

(iii) einem linearen, verzweigten, cyclischen oder cyclischen verzweigten Alkylenpolyamin mit 1 bis 10 C-Atomen in jeder Alkylengruppe und 2 bis 12 N-Atomen, von denen mindestens ein N-Atom als primäre Aminogruppe vorliegt, oder Mischungen davon,

mit einem Anteil von nicht mehr als 30 Gew.% des entsprechenden Polyisobutenylsuccinamids, bezogen auf das Gesamtgewicht des Produkts.

Ganz besonders bevorzugte erfindungsgemäße Polyisobutenylsuccinimidprodukte sind solche aus

(i) Polyisobuten mit einem zahlengemittelten Molekulargewicht $M_n$ von 500 bis 10000 Dalton und einem Gehalt an endständigen Doppelbindungen von mehr als 50 Mol-%, vorzugsweise mehr als 75 Mol-%,

(ii) Maleinsäureanhydrid und

(iii) einem Oligo- oder Polyamin der allgemeinen Formel I:

$$H_2N(CH_2)_x\text{-}NH\text{-}[(CH_2)_y\text{-}NH]_z\text{-}(CH_2)_xNH_2 \qquad (I),$$

worin x und y unabhängig voneinander für eine ganze Zahl von 1 bis 5 und vorzugsweise 2 bis 4 stehen und z eine ganze Zahl von 0 bis 8 bedeutet.

Gegenstand der Erfindung sind auch neue Polyisobutenylbernsteinsäurehalbester-Zwischenprodukte aus

(i) Polyisobuten mit einem zahlengemittelten Molekulargewicht $M_n$ von 500 bis 10000 Dalton und einem Gehalt an endständigen Doppelbindungen von mehr als 50 Mol-%, vorzugsweise mehr als 75 Mol-%,

(ii) Maleinsäureanhydrid und

(iii) Alkoholen der allgemeinen Formel ROH, worin R für geradkettiges oder verzweigtes, cyclisches oder verzweigt

cyclisches Alkyl mit 1 bis 16 C-Atomen steht, oder Phenolen.

Die erfindungsgemäßen Polyisobutenylbernsteinsäurehalbester-Zwischenprodukte werden beim erfindungsgemäßen Verfahren zur Herstellung von Polyisobutenylsuccinimidprodukten durchlaufen und können gewünschtenfalls auch isoliert werden. Sie sind nicht nur wertvolle Zwischenprodukte, sondern auch alleine oder in Kombination mit anderen Additiven als Zusätze zu Kraftstoffen oder Schmiermitteln brauchbar.

Gegenstand der Erfindung ist ferner ein Verfahren zur Herstellung der Polyisobutenylbernsteinsäurehalbester-Zwischenprodukte, bei dem man Polyisobuten, das terminale Doppelbindungen aufweist bzw. dessen Gehalt an terminalen Doppelbindungen wenigstens 50 mol-%, insbesondere wenigstens 75 mol-% beträgt, mit Maleinsäure, Maleinsäureanhydrid oder einem funktionellen Derivat davon umsetzt, das dadurch gekennzeichnet ist, dass man das gebildete Polyisobutenylsuccinanhydrid mit dem Alkohol zur Reaktion bringt.

Gegenstand der Erfindung ist auch die Verwendung der Polyisobutenylbernsteinsäurehalbester-Zwischenprodukte im erfindungsgemäßen Verfahren zur Herstellung von Polyisobutenylsuccinimidprodukten.

Schließlich ist Gegenstand der Erfindung die Verwendung der erfindungsgemäßen Polyisobutenylsuccinimidprodukte als Additive für Kraftstoffe, insbesondere Dieselkraftstoffe, Kerosin, bzw. allgemein Mitteldestillate, Heizöl, und Ottokraftstoff, oder Schmiermittel.

Erfindungsgemäß werden auch Dieselkraftstoffadditivgemische, Ottokraftstoffadditive und Schmiermittelzusammensetzungen bereitgestellt, die jeweils eine wirksame Menge an erfindungsgemäßen Polyisobutenylsuccinimidprodukten enthalten.

Das erfindungsgemäße Verfahren wird nachstehend noch ausführlicher erläutert.

Zur Herstellung des Polyisobutenylbernsteinsäureanhydrids (PIBSA) in der ersten Stufe geht man zweckmäßig von Polyisobutylen und einer einfach ungesättigten Säure, dem entsprechenden Anhydrid oder Ester, vorzugsweise Maleinsäureanhydrid, aus. In einer en-Reaktion lagert sich das Polyolefin an die Doppelbindung der Säurekomponente an.

Polyisobutene sind im Stand der Technik beschrieben. So ist beispielsweise in der DE-A-4319672 ein Verfahren zur Herstellung von Polyisobutenylbernsäureanhydrid aus Polyisobuten und Maleinsäureanhydrid beschrieben, bei dem Polyisobuten mit einem Gehalt an endständigen Doppelbindungen von mindestens 50% mit überschüssigem Maleinsäureanhydrid bei 140 °C bis 200 °C umgesetzt wird.

Grundsätzlich können beim erfindungsgemäßen Verfahren Polyisobutene mit einem sehr breiten, zahlenmittleren Molekulargewicht $M_n$ von 350 bis 20000 Dalton eingesetzt werden.

Besonders bevorzugt sind Polyisobutene des zahlengemittelten Molekulargewichtsbereichs ($M_n$) 500 bis 10000, vorzugsweise 500 bis 5000. Polyisobutene dieses Molekulargewichtsbereichs werden beispielsweise gemäß der US-A-5137980, EP-A-145235, US-A-5068490 hergestellt. Oligopropene bzw. Polypropene lassen sich vorzugsweise via Metallocenkatalyse erhalten und sind z. B. in der EP-A-490454 beschrieben. Auch Oligoolefine bzw. Polyolefine der Butene, Pentene, Hexene und Decene sowie Copolymere von Olefinmischungen, die auch bis zu 70 Mol-% Ethylen enthalten können, sind von besonderem Interesse. Besonders bevorzugt sind auch die Homo- und Copolymeren der 1-Olefine via Metallocenkatalyse.

Bevorzugt werden Polyolefine mit hohen Gehalten an endständigen Vinyl- der Vinyliden-Doppelbindungen, d. h. solche, die mehr als 50 mol-%, vorzugsweise mehr als 70 mol-% endständige Doppelbindungen aufweisen. Die Dispersizität D ($M_w$/$M_n$) der verwendeten Polymerisate liegt vorzugsweise unterhalb 3. Enge Verteilungen sind bevorzugt. Unter Dispersität versteht man den Quotienten aus gewichtsmittlerem Molekulargewicht $M_w$ geteilt durch das zahlenmittlere Molekulargewicht $M_n$. So sind z. B. Polyisobutene mit Verteilungen unter 2,0 für ≤ $M_n$ 2000 und unter 1,5 für ≤ $M_n$ 1000 besonders vorteilhaft. Das Polyolefin sollte frei von organischen und anorganischen Basen, Wasser, Alkoholen, Ethern, Säure und Peroxiden sein.

Besonders geeignete Polyisobutene sind insbesondere sogenannte "hochreaktive" Polyisobutene, die sich durch einen hohen Gehalt an terminal angeordneten ethylenischen Doppelbindungen auszeichnen. Geeignete hochreaktive Polyisobutene sind beispielsweise Polyisobutene, die einen Anteil an Vinyliden-Doppelbindungen von >70 Mol-%, insbesondere >80 Mol-% und insbesondere >85 Mol-% aufweisen. Bevorzugt sind insbesondere Polyisobutene, die einheitliche Polymergerüste aufweisen. Einheitliche Polymergerüste weisen insbesondere solche Polyisobutene auf, die zu wenigstens 85 Gew.-%, vorzugsweise zu wenigstens 90 Gew.-% und besonders bevorzugt zu wenigstens 95 Gew.-% aus Isobuteneinheiten aufgebaut sind. Vorzugsweise weisen solche hochreaktiven Polyisobutene ein zahlenmittleres Molekulargewicht $M_n$ von 350 bis 20000 Dalton auf. Darüber hinaus können die hochreaktiven Polyisobutene eine Polydispersität von < 2,5, beispielsweise < 1,5 bei $M_n$ ≤ 1000 aufweisen.

Besonders geeignete hochreaktive Polyisobutene sind zum Beispiel die Glissopal®-Marken der BASF Aktiengesellschaft, insbesondere Glissopal 1000 ($M_n$ = 1000), Glissopal 550 (V 33 ($M_n$ = 550)) und Glissopal 2300 ($M_n$ = 2300) und deren Mischungen. Andere zahlenmittlere Molekulargewichte können nach im Prinzip bekannter Weise durch Mischen von Polyisobutenen unterschiedlicher zahlenmittlerer Molekulargewichte oder durch extraktive Anreicherung von Polyisobutenen bestimmter Molekulargewichtsbereiche eingestellt werden.

Bei erfindungsgemäßen Verfahren kann man Polyisobuten mit Maleinsäure, Maleinsäureanhydrid oder einem funktionellen Derivat davon zu Polyisobutenylsuccinamid umsetzen. Unter dem Begriff "funktionelles Derivat" werden solche Derivate verstanden, welche zu demselben oder vergleichbaren Ergebnis bzw. Produkt führen. Zu funktionellen Derivaten gehören im Falle der Maleinsäure beispielsweise Maleinsäuremonoalkylester, Maleinsäuredialkylester, Maleinsäuredichlorid, Maleinsäuredibromid oder Maleinsäuremonoalkylestermonochlorid oder Maleinsäuremonoalkylestermonobromid. Die im Falle der Maleinsäureester eingesetzten Alkoholkomponenten sind beispielsweise Niedrigalkylreste mit beispielsweise 1 bis 6 Kohlenstoffatomen, insbesondere 1 bis 4 Kohlenstoffatomen und beispielsweise Methyl oder Ethyl.

Das intermediär im erfindungsgemäßen Verfahren entstehende Polyisobutenylsuccinanhydrid kann auch in Form eines funktionellen Derivats vorliegen, beispielsweise in Form der freien Säure, eines Niedrigalkylmono- oder diesters, in Form eines Säurehalogenids (Chlorid, Bromid). Der Niedrigalkylrest im Esterderivat kann beispielsweise 1 bis 6 Kohlenstoffatome umfassen.

Im erfindungsgemäßen Verfahren werden Oligo- oder Polyamine eingesetzt. Bei diesen kann es sich beispielsweise um Alkylenpolyamine handeln, einschließlich Methylenpolyaminen, Ethylenpolyaminen, Butylenpolyaminen, Propylenpolyaminen und Pentylenpolyaminen. Zu speziellen Beispielen für solche Polyamine gehören Ethylendiamin, Triethylentetramin, Propylendiamin, Trimethylendiamin, Tripropylentetramin, Tetraethylenpentamin, Hexaethylenheptamin, Pentaethylenhexamin oder deren Mischungen.

Derartige Polyamine sind ausführlich unter dem Kapitel "Ethylene Amines" in Kirk Othmers "Encyclopedia of Chemical Technology", 2. Auflage, Band 7, Seiten 22-37, Interscience Publishers, New York (1965) beschrieben. Derartige Polyamine werden besonders zweckmäßig durch Umsetzung von Ethylendichlorid mit Ammoniak oder durch Reaktion eines Ethylenimins mit einem Ringöffnungsmittel, beispielsweise Wasser oder Ammoniak hergestellt.

Besonders bevorzugte Oligo- bzw. Polyamine beim erfindungsgemäßen Verfahren besitzen die allgemeine Strukturformel I:

$$H_2N(CH_2)_x\text{-}NH\text{-}[(CH_2)_y\text{-}NH]_z\text{-}(CH_2)_xNH_2 \qquad (I),$$

worin x und y unabhängig voneinander für eine ganze Zahl von 1 bis 5 und vorzugsweise 2 bis 4 stehen und z eine ganze Zahl von 0 bis 8 bedeutet, beziehungsweise deren Mischungen.

Die im erfindungsgemäßen Verfahren einsetzbaren Alkohole sind vorzugsweise einwertige Alkohole, es kommen aber auch mehrwertige Alkohole in Betracht.

Besonders bevorzugt sind ein- oder mehrwertige Alkohole mit 1 bis 16 Kohlenstoffatomen.

Zu geeigneten Alkoholen gehören: Methanol, Ethanol, n-Propanol, Isopropanol, Cyclopropylcarbinol, n-Butanol, sec-Butanol, Isobutanol, tert-Butanol, 2-Hydroxymethylfuran, Amylalkohol, Isoamylalkohol, Vinylcarbinol, Cyclohexanol, n-Hexanol, 4-Methyl-2-pentanol, 2-Ethylbutylalkohol, sec-Caprylalkohol, 2-Ethylhexanol, n-Decanol, Laurylalkohol, Isocetylalkohol oder deren Mischungen. Bevorzugte Alkohole sind solche mit 6 bis 16 Kohlenstoffatomen, besonders bevorzugt ist 2-Ethylhexanol.

Das molare Verhältnis von Polyisobutenylsuccinanhydrid zu Alkohol kann in großem Umfang variieren. Es ist nicht erforderlich, stöchiometrische Mengen an Alkohol einzusetzen, selbst vergleichsweise geringe molare Anteile an Alkohol reichen aus, um den vorteilhaften Effekt des erfindungsgemäßen Verfahrens zu erzielen. Ein zweckmäßiges molares Verhältnis PIBSA:Alkohol liegt bei 10 bis 0,5, vorzugsweise 4 bis 0,8.

Zu den Phenolen gehören Phenol, Naphthol, (o,p)-Alkylphenole, z. B. Di-tert.-butylphenol, Salicylsäure.

Das erfindungsgemäße Verfahren zur Herstellung neuer Polyisobutenylsuccinimidprodukte lässt sich in geeigneter Weise so steuern, dass entweder ein höherer Anteil an Mono-Succinimiden oder an Bis-Succinimiden gebildet wird. Die erfindungsgemäßen Polyisobutenylsuccinimidprodukte mit einem höheren Mono-Succinimidanteil eignen sich besonders als Additive für Kraftstoffe (Dieselkraftstoff, Heizöl, Ottokraftstoff), während sich die erfindungsgemäßen Polyisobutenylsuccinimidprodukte mit einem erhöhten Anteil an Bis-Succinimiden besonders als Additive für Schmierstoffe eignen. Das Verhältnis an gebildeten Mono- zu Bis-Imiden lässt sich beispielsweise durch das molare Verhältnis von Polyisobutenylsuccinanhydrid zu Oligo- oder Polyamin beeinflussen. Je größer der molare Anteil an Polyisobutenylsuccinanhydrid im Verhältnis zum Oligo- oder Polyamin ist, desto größere Anteile an erfindungsgemäßen Mono-Succinimid werden gebildet und umgekehrt.

Um einen hohen Anteil an Mono-Succinimid zu erhalten, arbeitet man bevorzugt mit einem molaren Verhältnis Polyisobmtenylsuccinanhydrid (PIBSA): Oligo- oder Polyamin von 0,7 bis 1,3, besonders bevorzugt von 0,9 bis 1,1.

Um einen erhöhten Anteil des Bis-Succinimids zu erhalten, arbeitet man bevorzugt mit einem molaren Verhältnis PIBSA:Oligo- oder polyamin von 3 bis 18, besonders bevorzugt 2,3 bis 1,9.

Die erfindungsgemäßen Polyisobutenylsuccinimidprodukte lassen sich als Additive (Additivpakete) für Kraftstoffe, insbesondere Dieselkraftstoff, Heizöl, Kerosin, bzw. allgemein Mitteldestillate, und Ottokraftstoff, oder Schmiermittel, verwenden.

Wenn die erfindungsgemäßen Polyisobutenylsuccinimidprodukte als Dieselkraftstoffadditive verwendet werden, enthalten diese eine wirksame Menge an Polyisobutenylsuccinimidprodukten. Zweckmäßig enthalten die Dieselkraftstoffadditive einen Anteil an Polyisobutenylsuccinimidprodukten von 10 bis 5000 ppm, vorzugsweise von 50 bis 1000 ppm, bezogen auf das Gesamtgewicht des Dieselkraftstoffs.

Die Dieselkraftstoffadditivgemische enthalten mindestens einen weiteren Zusatzstoff, ausgewählt unter Detergentien, Schmierfähigkeitsverbesserern, Korrosionsinhibitoren, Cetanzahlverbesserern, Demulgatoren, Antischaummitteln, Lösemitteln, Lösungsvermittlern, Antioxidantien, Metalldeaktivatoren, Deodorants und andere, übliche Zusatzstoffe.

Die erfindungsgemäßen Polyisobutenylsuccinimidprodukte können auch als Additive für Heizöl eingesetzt werden. Man verwendet sie in einer wirksamen Menge, zweckmäßig in einer Menge von 10 bis 1000 ppm, vorzugsweise von 50 bis 500 ppm, bezogen auf das Gesamtgewicht des Heizöls. Dieses kann mindestens einen weiteren Zusatzstoff enthalten, der ausgewählt sein kann unter Korrosionsinhibitoren, Demulgatoren, Antischaummitteln, Antioxidantien, Metalldeaktivatoren, Ferrocenen und Deodorants.

Die erfindungsgemäßen Polyisobutenylsuccinimidprodukte können auch für Ottokraftstoffadditivgemische eingesetzt werden. Diese enthalten eine wirksame Menge an erfindungsgemäßen Polyisobutenylsuccinimidprodukten, zweckmäßig von 10 bis 5000 ppm, vorzugsweise von 50 bis 2000 ppm, bezogen auf das Gesamtgewicht des Ottokrattstoffs.

Die Ottokraftstoffadditivgemische mit einem Gehalt an erfindungsgemäßen Polyisobutenylsuccinimidprodukten können auch mindestens einen weiteren Zusatzstoff, ausgewählt unter Detergensadditiven, Trägerölen, Schmierfähigkeitsverbesserern, Lösungsmitteln und Korrosionsinhibitoren enthalten.

Schließlich eignen sich die erfindungsgemäßen Polyisobutenylsuccinimidprodukte auch für Schmiermittelzusammensetzungen, die eine wirksame Menge an erfindungsgemäßen Produkten enthalten, zweckmäßig 0,1 bis 10 Gew.-%, vorzugsweise 0,5 bis 5 Gew.-%, bezogen auf das Gesamtgewicht der Schmiermittelzusammensetzung.

Die Schmiermittelzusammensetzungen mit einem Gehalt an erfindungsgemäßen Polyisobutenylsuccinimidprodukten können auch weitere Zusatzstoffe enthalten, die insbesondere ausgewählt sind unter Schmierfähigkeitsverbesserern, Verschleißschutzadditiven, Korrosionsinhibitoren, VI-Verbesserern.

Die erfindungsgemäßen Polyalkenylsuccinimidprodukte werden insbesondere bevorzugt mit mindestens einem Kraftstoffadditiv, insbesondere Ottokraftstoffadditiv mit Detergenswirkung oder mit Ventilsitzverschleiß-hemmender Wirkung (im folgenden bezeichnet als Detergensadditive) kombiniert. Dieses Detergensadditiv besitzt mindestens einen hydrophoben Kohlenwasserstoffrest mit einem zahlengemittelten Molekulargewicht ($M_n$) von 85 bis 20000 und mindestens eine polare Gruppierung ausgewählt aus:

(a) Mono- oder Polyaminogruppen mit bis zu 6 Stickstoffätomen, wobei mindestens ein Stickstoffatom basische Eigenschaften hat;

(b) Nitrogruppen, ggf. in Kombination mit Hydroxylgruppen;

(c) Hydroxylgruppen in Kombination mit Mono- oder Polyaminogruppen, wobei mindestens ein Stickstoffatom basische Eigenschaften hat;

(d) Carboxylgruppen oder deren Alkalimetall- oder Erdalkalimetallsalzen;

(e) Sulfonsäuregruppen oder deren Alkalimetall- oder Erdalkalimetallsalzen;

(f) Polyoxy-$C_2$- bis $C_4$-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;

(g) Carbonsäureestergruppen;

(h) aus Bernsteinsäureanhydrid abgeleitete Gruppierungen mit Hydroxy- und/oder Amino- und/oder Amido- und/oder Imidogruppen; und

(i) durch Mannich-Umsetzung von substituierten Phenolen mit Aldehyden und Mono- oder Polyaminen erzeugte Gruppierungen;

Der hydrophobe Kohlenwasserstoffrest in den obigen Detergensadditiven, welcher für die ausreichende Löslichkeit im Kraftstoff sorgt, hat ein zahlengemitteltes Molekulargewicht ($M_n$) von 85 bis 20,000, insbesondere von 113 bis 10,000, vor allem von 300 bis 5000. Als typischer hydrophober Kohlenwasserstoffrest, insbesondere in Verbindung mit den polaren Gruppierungen (a), (c), (h) und (i), kommen der Polypropenyl-, Polybutenyl- und Polyisobutenylrest mit jeweils $M_n$ = 300 bis 5000, insbesondere 500 bis 2500, vor allem 700 bis 2300, in Betracht.

Als Beispiele für obige Gruppen von Detergensadditiven seien die folgenden genannt:

Mono- oder Polyaminogruppen (a) enthaltende Additive sind vorzugsweise Polyalkenmono- oder Polyalkenpolyamine auf Basis von Polypropen oder von hochreaktivem (d.h. mit überwiegend endständigen Doppelbindungen - meist in der alpha-und beta-Position) oder konventionellem (d.h. mit überwiegend mittenständigen Doppelbindungen) Polybuten oder Polyisobuten mit $M_n$ = 300 bis 5000. Derartige Additive auf Basis von hochreaktivem Polyisobuten, welche aus dem Polyisobuten, welches bis zu 20 Gew.-% n-Buten-Einheiten enthalten kann, durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin hergestellt werden können, sind insbesondere aus der EP-A-244 616 bekannt. Geht man bei der Herstellung der Additive von Polybuten oder Polyisobuten mit überwiegend mittenständigen Doppelbindungen (meist in der beta-und gamma-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier die gleichen Amine wie oben für die reduktive Aminierung des hydroformylierten hochreaktiven Polyisobutens eingesetzt werden. Entsprechende Additive auf Basis von Polypropen sind insbesondere in der WO-A-94/24231 beschrieben.

Weitere bevorzugte Monoaminogruppen (a) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in WO-A-97/03946 beschrieben sind.

Weitere bevorzugte Monoaminogruppen (a) enthaltende Additive sind die aus Polyisobutenepoxiden durch Umsetzung mit Aminen und nachfolgende Dehydratisierung und Reduktion der Aminoalkohole erhältlichen Verbindungen, wie sie insbesondere in DE-A-196 20 262 beschrieben sind.

Nitrogruppen, ggf. in Kombination mit Hydroxylgruppen, (b) enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in WO-A-96/03367 und WO-A-96/03479 beschrieben sind. Diese Umsetzungsprodukte stellen in der Regel Mischungen aus reinen Nitropolyisobutanen (z.B. 24-Dinitropolyisobutan) und gemischten Hydroxynitropolyisobutanen (z. B. 2-Nitro-4-hydroxypolyisobutan) dar.

Hydroxylgruppen in Kombination mit Mono- oder Polyaminogruppen (c) enthaltende Additive sind insbesondere Umsetzungsprodukte von Polyisobutenepoxiden, erhältlich aus vorzugsweise überwiegend endständige Doppelbindungen aufweisendem Polyisobuten mit $M_n$ = 300 bis 5000, mit Ammoniak, Mono- oder Polyaminen, wie sie insbesondere in EP-A-476 485 beschrieben sind.

Carboxylgruppen oder deren Alkalimetall- oder Erdalkalimetallsalze (d) enthaltende Additive sind vorzugsweise Copolymere von $C_2$-$C_{40}$-*Olefinen* mit, Maleinsäureanhydrid mit einer Gesamt-Molmasse von 500 bis 20000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A-307 815 bekannt. Derartige Additive dienen hauptsächlich zur Verhinderung von Ventilsitzverschleiß und können, wie in der WO-A-87/01126 beschrieben, mit Vorteil in Kombination mit üblichen Kraftstoffdetergenzien wie Poly(iso)butenaminen oder Polyetheraminen eingesetzt werden.

Sulfonsäuregruppen oder deren Alkalimetall- oder Erdalkalimetallsalze (e) enthaltende Additive sind vorzugsweise Alkalimetall- oder Erdalkalimetallsalze eines Sulfobernsteinsäurealkylesters, wie er insbesondere in der EP-A-639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)butenaminen oder Polyetheraminen eingesetzt werden.

Polyoxy-$C_2$-$C_4$-alkylengruppierungen (f) enthaltende Additive sind vorzugsweise Polyether oder Polyetheramine, welche durch Umsetzung von $C_2$-$C_{60}$-Alkanolen, $C_6$-$C_{30}$ Alkandiolen**,** Mono- oder Di-$C_2$-$C_{30}$-alkylaminen, $C_1$-$C_{30}$-Alkylcyclohexanolen oder. $C_1$-$C_{30}$-Alkylphenolen mit 1 bis 30 mol Ethylenoxid und/oder Propylenoxid und/ oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A-310 875, EP-A-356 725, EP-A-700 985 und US-A-4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (g) enthaltende Additive sind vorzugsweise Ester aus Mono-, Di- oder Tricarbonsäuren mit langkettigen Alkanolen oder Polyolen, insbesondere solche mit einer Mindestviskosität von 2 $mm^2/s$ bei 100 °C, wie sie insbesondere in DE-A-38 38 918 beschrieben sind. Als Mono-, Di- oder Tricarbonsäuren können aliphatische oder aromatische Säuren eingesetzt werden, als Esteralkohole bzw.- polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxy- und/oder Amino- und/oder Amido- und/oder Imidogruppen (h) enthaltende Additive sind vorzugsweise entsprechende Derivate von Polyisobutenylbernsteinsäureanhydrid, welche durch Umsetzung von konventionellem oder hochreaktivem Polyisobuten mit $M_n$ = 300 bis 5000 mit Maleinsäureanhydrid auf thermischen Wege oder über das chlorierte Polyisobuten erhältlich sind. Von besonderem Interesse sind hierbei Derivate mit aliphatischen Polyaminen wie Ethylendiamin, Diethylentriamin, Triethylentetramin oder Tetraethylenpentamin. Derartige Ottokraftstoffadditive sind insbesondere in US-A-4 849 572 beschrieben.

Durch Mannich-Umsetzung von substituierten Phenolen mit Aldehyden und Mono- oder Polyaminen erzeugte Gruppierungen (i) enthaltende Additive sind vorzugsweise Umsetzungsprodukte von polyisobutensubstituierten Phenolen mit Formaldehyd und Mono- oder Polyaminen wie Ethylendiamin, Diethylentriamin, Triethylentetramin, Tetraethylenpentamin oder Dimethylaminopropylamin. Die polyisobutenylsubstituierten Phenole können aus konventionellem oder hochreaktivem Polyisobuten mit $M_n$ = 300 bis 5000 stammen. Derartige "Polyisobuten-Mannichbasen" sind insbesondere in der EB-A-831 141 beschrieben.

Zur genaueren Definition der einzelnen aufgeführten Ottokraftstoffadditive wird hier auf die Offenbarungen der obengenannten Schriften des Standes der Technik ausdrücklich Bezug genommen.

Die erfindungsgemäßen Kraftstoffadditivzusammensetzungen können darüber hinaus noch weitere übliche Komponenten und Additive enthalten. Hier sind in erster Linie Trägeröle ohne ausgeprägte Detergenswirkung zu nennen.

Geeignete mineralische Trägeröle, sind bei der Erdölverarbeitung anfallende Fraktionen, wie Kerosin oder Naphtha, Brightstock oder Grundöle mit Viskositäten wie beispielsweise aus der Klasse SN 500 - 2000; aber auch aromatische Kohlenwasserstoffe, paraffinische Kohlenwasserstoffe, und Alkoxyalkanole. Brauchbar ist ebenfalls eine als "hydrocrack oil" bekannte und bei der Raffination von Mineralöl anfallende Fraktion (Vakuumdestillatschnitt mit einem Siedebereich von etwa 360 bis 500°C, erhältlich aus unter Hochdruck katalytisch hydriertem und isomerisiertem sowie entparaffiniertem natürlichen Mineralöl). Ebenfalls geeignet sind Mischungen oben genannter mineralischer Trägeröle.

Beispiele für erfindungsgemäß verwendbare synthetische Trägeröle sind ausgewählt unter: Polyolefinen (Polyalphaolefine oder Polyinternalolefine), (Poly)estern, (Poly)alkoxylaten, Polyethern, aliphatischen Polyetheraminen, alkylphenolgestarteten Polyethern, alkylphenolgestarteten Polyetheraminen und Carbonsäureester langkettiger Alkanole.

Beispiele für geeignete Polyolefine sind Olefinpolymerisate mit $M_n$ = 400 bis 1800, vor allem auf Polybuten- oder Polyisobuten-Basis (hydriert oder nicht hydriert).

Beispiele für geeignete Polyether oder Polyetheramine sind vorzugsweise Polyoxy-$C_2$-$C_4$-alkylengruppierungen enthaltende Verbindungen, welche durch Umsetzung von $C_2$-$C_{60}$-Alkanolen, $C_6$-$C_{30}$-Alkandiolen, Mono- oder Di-$C_2$-$C_{30}$-alkylaminen, $C_1$-$C_{30}$-Alkylcyclohexanolen oder $C_1$-$C_{30}$-Alkylphenolen mit 1 bis 30 mol Ethylenoxid und/ oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EPA-310 875, EP-A-356 725, EP-A-700 985 und US-A-4,877,416 beschrieben. Beispielsweise können als Polyetheramine Poly-$C_2$-$C_6$-Alkylenoxidamine oder funktionelle Derivate davon verwendet werden. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Beispiele für Carbonsäureester langkettiger Alkanole sind insbesondere Ester aus Mono-, Di- oder Tricarbonsäuren mit langkettigen Alkanolen oder Polyolen, wie sie insbesondere in der DE-A-38 - 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate; iso-Phthalate, Terephthalate und Trimellitate des Isooctanols, Isononanols, Isodecanols und des Isotridecanols, wie z. B. Di-(n- oder Iso-tridecyl)-phthalat.

Weitere geeignete Trägerölsysteme sind beispielsweise beschrieben in, DE-A-38 26 608, DE-A-41 42 241, DE-A-43 09 074, EP-A-0 452 328 und EP-A-0 548 617, worauf hiermit ausdrücklich Bezug genommen wird.

Beispiele für besonders geeignete synthetische Trägeröle sind alkoholgestartete Polyether mit etwa 5 bis 35, wie z. B. etwa 5 bis 30, $C_3$-$C_6$-Alkylenoxideinheiten, wie z. B. ausgewählt unter Propylenoxid-, n-Butylenoxid- und i-Butylenoxid-Einheiten, oder Gemischen davon. Nichtlimitierende Beispiele für geeignete Starteralkohole sind langkettige Alkanole oder mit langkettigem Alkyl substituierte Phenole, wobei der langkettige Alkylrest insbesondere für einen geradkettigen oder verzweigten $C_6$-$C_{18}$-, insbesondere $C_8$-$C_{15}$-Alkylrest steht. Als bevorzugte Beispiele sind zu nennen Tridecanol und Nonylphenol.

Weitere geeignete synthetische Trägeröle sind alkoxylierte Alkylphenole, wie sie in der DE-A-101 02 913.6 beschrieben sind

Weitere übliche Additive sind Korrosionsinhibitoren, beispielsweise auf Basis von zur Filmbildung neigenden Ammoniumsalzen organischer Carbonsäuren oder von heterocyclischen Aromaten bei Buntmetallkorrosionsschutz; Antioxidantien oder Stabilisatoren, beispielsweise auf Basis von Aminen wie p-Phenylendiamin, Dicyclohexylamin oder Derivaten hiervon oder von Phenolen wie 2,4-Di-tert.-butylphenol oder 3,5-Di-tert.-butyl-4-hydroxyphenylpropionsäure; Demulgatoren; Antistatikmittel; Metallocene wie Ferrocen; Methylcyclopentadienylmangantricarbonyl; Schmierfähigkeitsverbesserer (Lubricity-Additive) wie bestimmte Fettsäuren, Alkenylbernsteinsäureester, Bis(hydroxyalkyl)fettamine, Hydroxyacetamide oder Ricinusöl; sowie Farbstoffe (Marker). Gegebenenfalls werden auch Amine zur Absenkung des pH-Wertes des Kraftstoffes zugesetzt.

Die Komponenten bzw. Additive können dem Kraftstoff, z. B. Ottokraftstoff, einzeln oder als vorher zubereitetes Konzentrat (Additivpaket) zusammen mit dem erfindungsgemäßen Polyalkenylsuccinimid zugegeben werden.

Die genannten Detergensadditive mit den polaren Gruppierungen (a) bis (i) werden dem Ottokraftstoff üblicherweise in einer Menge von 10 bis 5000 Gew.-ppm, insbesondere 50 bis 1000 Gew.-ppm, zugegeben. Die sonstigen erwähnten Komponenten und Additive werden, wenn gewünscht, in hierfür üblichen Mengen zugesetzt.

Die erfindungsgemäßen Additivzusammensetzungen sind in allen herkömmlichen Ottokraftstoffen, wie sie beispielsweise in Ullmann's Encyclopedia of Industrial Chemistry , 5. Aufl. 1990, Band A16, S. 719 ff. beschrieben sind, verwendbar.

Zum Beispiel ist die Verwendung in einem Ottokraftstoff mit einem Aromatengehalt von maximal 42 Vol.-% und einem Schwefelgehalt von maximal 150 Gew.-ppm möglich.

Der Aromatengehalt des Ottokraftstoffes beträgt beispielsweise 30 bis 42 Vol.-%, insbesondere 32 bis 40 Vol.-%.

Der Schwefelgehalt des Ottokraftstoffes beträgt beispielsweise 5 bis 150 Gew.-ppm, insbesondere bei 10 bis 100 Gew.-ppm.

Der Ottokraftstoff weist beispielsweise einen Olefingehalt von 6 bis 21 Vol.-%, insbesondere bei 7 bis 18 Vol.-% auf.

Der Ottokraftstoff kann beispielsweise einen Benzolgehalt von 0,5 bis 1,0 Vol.-%, insbesondere bei 0,6 bis 0,9 Vol.-% aufweisen.

Der Ottokraftstoff weist beispielsweise einen Sauerstoffgehalt von 1,0 bis 2,7 Gew.-%, insbesondere von 1,2 bis 2,0 Gew.-%, auf.

Insbesondere können solche Ottokraftstoffe beispielhaft genannt werden, welche gleichzeitig einen Aromatengehalt von maximal 38 Vol.%, einen Olefingehalt von maximal 21 Vol.-%, einen Schwefelgehalt von maximal 50 Gew.-ppm, eine Benzolgehalt von maximal 1,0 Vol.-% und eine Sauerstoffgehalt von 1,0 bis 2,7 Gew.-% aufweisen.

Der Gehalt an Alkoholen und Ethern im Ottokraftstoff ist normalerweise relativ niedrig. Typische maximale Gehalte sind für Methanol 3 Vol.-%, für Ethanol 5 Vol.-%, für Isopropanol 10 Vol.-%, für tert.-Butanol 7 Vol.-%, für Isobutanol 10 Vol.-% und für Ether mit 5 oder mehr C-Atomen im Molekül 15 Vol.-%.

Der Sommer-Dampfdruck des Ottokraftstoffes beträgt üblicherweise maximal 70 kPa, insbesondere 60 kPa (jeweils bei 37 °C).

Die ROZ des Ottokraftstoffes beträgt in der Regel 90 bis 100. Ein üblicher Bereich für die entsprechende MOZ liegt bei 80 bis 90.

Die genannten Spezifikationen werden nach üblichen Methoden bestimmt (DIN EN 228).

Die Erfindung wird durch die nachstehenden Beispiele weiter erläutert.

Beispiele 1 und 2

Verhinderung der Schäumung des Eduktgemisches

Für die Bestimmung des notwendigen Reaktionsvolumens bzw. der Volumenzunahme während der Reaktion wurde ein skalierter 500 ml-Reaktionskolben mit Rührer und einem ebenfalls skaliertem Steigrohr (Füllvolumen 200 ml) mit 300 g Polyisobutenylsuccinanhydrid (PIBSA) (Verseifungszahl VZ 95) und 50 g Tetraethylenpentamin befüllt. Nach inniger Durchmischung der Edukte wurde bei einer Temperatur von 50 °C das Gesamtvolumen $V_0$ zu 375 ml resp. einem Füllstand von 75 % bestimmt. Anschließend wurde der Kolbeninhalt binnen 20 Minuten auf 140 °C erwärmt. Im zeitlichen Abstand von 3 Minuten wurde (ohne bzw. bei abgeschaltetem Rührer) der Befüllungsgrad bzw. das Eduktvolumen bestimmt. Untenstehend sind die jeweils verwendeten Zusätze (Alkohol bzw. Lösungsmittel) tabellarisch zusammengestellt. Für die Auswertung wurde jeweils die maximal beobachtete Volumenzunahme herangezogen.

Tabelle II:

| | ROH [ml] | Lösungsmittel* [ml] | $V_0$ [ml] | $V_{max}$. [ml] | $\Delta V$ [%] |
|---|---|---|---|---|---|
| Vergleich | - | - | 375 | 640 | 71 |
| Beispiel 2 | Ethylhexanol 40 | - | 415 | 460 | 10,8 |
| Beispiel 3 | n-Butanol 25 | - | 400 | 450 | 12,5 |

Tabelle fortgesetzt

| | ROH [ml] | Lösungsmittel* [ml] | $V_0$ [ml] | $V_{max}$. [ml] | ΔV [%] |
|---|---|---|---|---|---|
| Vergleich | - | 40 | 415 | 675 | 63 |
| * Solvesso® 150 | | | | | |

Somit können die Chargenausbeuten durch den erfindungsgemäßen Zusatz von Alkohol bei einem gegebenen Reaktionsbehälter um etwa 40 % angehoben werden. Die noch auftretende Volumenzunahme in Gegenwart des Alkohols kann im Wesentlichen der thermischen Ausdehnung des Reaktionsgemischs beim Erhitzen auf 140 °C zugeschrieben werden.

Beispiele 3 bis 7

Herstellung von Mono-Succinimiden als Additive für Kraftstoffe

Allgemeine Arbeitsweise:

In einem 1 1-Dreihalskolben werden 630 g Polyisobutenylsuccinanhydrid (PIBSA) 1000 mit einem zahlengemittelten Molekulargewicht $M_n$ von 1000 und einer Verseifungszahl von 95 mit 0,2 bis 2 Mol eines Alkohols (ROH) gemischt und innerhalb von 20 Minuten auf 80 °C bis 160 °C erhitzt. Man gibt 0,55 Mol eines Amins (beispielsweise 105 g Tetraethylenpentamin (TEPA)) oder 82 g Triethylentetramin (TETA) zu. Bei 150 °C bis 180 °C lässt man dann 90 bis 180 Minuten nachrühren. Gewünschtenfalls kann man den Alkohol anschließend im Vakuum entfernen.

Zur Bestimmung der Verseifungszahl werden 1,0 g Produkt in 25 ml einer 0,5 normalen KOH mit Lösungsmittel Ethanol/Toluol 1:1 10 Minuten unter Rückfluss erhitzt, die Heizplatte wird entfernt, der Rückflusskühler mit 20 ml Methanol gespült und nach dem Erkalten wird mit wässriger HCl zurücktitriert.

Tabelle 1:

| Beispiel | Alkohol | Molverhältnis PIBSA/ROB | Amin | Molverhältnis PIBSA/Amin |
|---|---|---|---|---|
| 3 | Ethanol | 1,0 | TEPA[1)] | 1,0 |
| 4 | n-Butanol | 0,5 | TEPA | 1,0 |
| 5 | 2-Ethylhexanol | 1,0 | TEPA | 1,0 |
| 6 | Isopropanol | 1,0 | TETA[2)] | 1,0 |
| 7 | 2-Ethylhexanol | 0,5 | TETA | 1,0 |
| [1)] TEPA: Tetraethylenpentamin<br>[2)] TETA: Triethylentetramin | | | | |

Beispiele 8 bis 11

Herstellung von Bis-Succinimiden als Additive für Schmieröle :

Allgemeine Arbeitsweise:

In einem 1 l-Dreihalskolben werden 680 g Polyisobutenylsuccinanhydrid 1000 mit einem zahlengemittelten Molekulargewicht $M_n$ von 1000 Dalton und einer Verseifungszahl von 95 mit 0,2 bis 2 Mol eines Alkohols (ROH) gemischt und innerhalb von 20 Minuten auf 80 °C bis 160 °C erhitzt. Man gibt 0,3 Mol Tetraethylenpentamin (TEPA) bzw. Triethylentetramin (TETA) zu. Bei 150 °C bis 180 °C lässt man 90 bis 160 Minuten nachrühren. Das Produkt wird anschließend im Vakuum vom Alkohol befreit.

Die Einzelheiten sind in der nachfolgenden Tabelle 2 aufgeführt.

Tabelle 2:

| Beispiel | Alkohol | Molverhältnis PIBSA/ROH | Amin | Molverhältnis PIBSA/Amin |
|---|---|---|---|---|
| 8 | 2-Ethylhexanol | 1,5 | TEPA[1)] | 2,0 |

Tabelle fortgesetzt

| Beispiel | Alkohol | Molverhältnis PIBSA/ROH | Amin | Molverhältnis PIBSA/Amin |
|---|---|---|---|---|
| 9 | n-Butanol | 1,0 | TETA[2)] | 2,0 |
| 10 | 2-Ethylhexanol | 1,0 | TETA | 2,0 |
| 11 | 2-Ethylhexanol | 1,0 | TETA | 2,0 |
| 1) TEPA: Tetraethylenpentamin<br>2) TETA: Triethylentetramin | | | | |

Ergebnisse der motorischen Tests

Motorische Tests wurden stationär mit einem Peugeot Dieselmotor Typ XUD 9, 45 kW, 1,9 1 Hub x Bohrung) durchgeführt. Es wurde ein schwefelarmer Dieselkraftstoff gemäß EN 590 mit einem Detergentgehalt von 300 ppm verwendet.

Für das Vergleichsbeispiel wurde ein handelsüblicher Kraftstoff entsprechend DK EN 590 mit 300 ppm eines handelsüblichen Mono-Succinimid-Dispergators additiviert. Der Mono-Succinimid-Dispergator wurde nach einem Verfahren hergestellt, das ohne den erfindungsgemäßen Alkoholzusatz durchgeführt wurde. Man verwendete PIBSA 1000 und TEPA. Dieses Herstellungsverfahren ist in der WO 98/12282 bzw. der EP-A-271937 beschrieben.

Als Testprozedere zur Bestimmung von Motorablagerungen wurde ein 6 Stunden-Zyklus bei variabler Drehzahl und Leistungsabnahme gewählt. Der Test wurde analog zu den Vorschriften durchgeführt, die sich im Entwurf für die europäische Norm CEC-PF 023 finden. Die Sauberkeit des Brennraums wurde anschließend quantitativ bestimmt. Ablagerungen an den Einspritzdüsen wurden anhand der Durchflussreduzierung in % nach ISO 4113 ermittelt.

Tabelle 3:

| | Bsp. 3 | Bsp. 4 | Bsp. 5 | Bsp. 6 | Bsp. 7 | Vergleichsbeispiel |
|---|---|---|---|---|---|---|
| Ablagerungen Brennraum [mg/Zylinder] | 525 | 370 | 380 | 530 | 405 | 560 |
| Einspritzdüsen-Red. Durchfluss [%] | 53 | 46 | 42 | 49 | 45 | 61 |
| Ergebnisse zur Performance von Schmleroladditiven | | | | | | |

Der Tüpfeltest wird unter anderem in Les Huiles pour Moteurs et le Graissage des Moteurs, Band 1, 1962, Seiten 89-90, von A. Schilling, beschrieben.

Tabelle 4:

| | Bsp. 8 | Bsp. 9 | Bsp. 10 | Bsp. 11 | Bsp. 12 | Vergleichsbeispiel* |
|---|---|---|---|---|---|---|
| Ergebnisse des Tüpfeltests | 615 | 638 | 653 | 605 | 623 | 580 |
| * hergestellt ohne Zusatz von Alkohol nach einem Verfahren, das im Wesentlichen in DE-A-2808105 und US-A-5,137,978 beschrieben ist. | | | | | | |

## Patentansprüche

**1.** Verfahren zur Herstellung von Polyisobutenylsuccinimidprodukten, bei dem man ein Polyisobuten mit Maleinsäure, Maleinsäureanhydrid oder einem funktionellen Derivat davon zu Polyisobutenylsuccinanhydrid umsetzt und anschließend das Polyisobutenylsuccinanhydrid mit einem Oligo- oder Polyamin zur Reaktion bringt, **dadurch gekennzeichnet, dass** man das Polyisobutenylsuccinanhydrid entweder

(a) zuerst mit einem Alkohol oder Phenol und ohne Isolierung des Reaktionsprodukts anschließend mit dem Oligo- oder Polyamin umsetzt, oder
(b) das Polyisobutenylsuccinanhydrid in Gegenwart eines Alkohols oder Phenols mit dem Oligo- oder Polyamin umsetzt und
(c) gewünschtenfalls anschließend den Alkohol oder das Phenol entfernt.

**2.** Verfahren nach Anspruch 1, **dadurch gekennzeichnet, dass** man die Reaktion mit dem Alkohol oder Phenol bei erhöhter Temperatur, vorzugsweise bei 50 bis 180 °C, insbesondere,bei 80 bis 160°C, durchführt.

**3.** Verfahren nach einem der Ansprüche 1 oder 2, **dadurch gekennzeichnet, dass** man einwertige Alkohole der allgemeinen Formel ROH verwendet, worin R für geradkettiges oder verzweigtes, cyclisches oder verzweigt cyclisches Alkyl mit 1 bis 16 C-Atomen steht.

**4.** Verfahren nach einem der Ansprüche 1 bis 3, **dadurch gekennzeichnet, dass** man als Oligo- oder polyamine solche der allgemeinen Formel I:

$$H_2N(CH_2)_x\text{-}NH\text{-}[(CH_2)_y\text{-}NH]_2\text{-}(CH_2)_xNH_2 \qquad (I),$$

worin x und y unabhängig voneinander für eine ganze Zahl von 1 bis 5 stehen und z eine ganze Zahl von 0 bis 8 bedeutet, oder deren Mischungen verwendet.

**5.** Polyisobutenylsuccinimidprodukte, erhältlich durch ein Verfahren, bei dem man ein Polyisobuten mit Maleinsäure, Maleinsäureanhydrid oder einem funktionellen Derivat davon zu Polyisobutenylsuccinanhydrid umsetzt und anschließend das Polyisobutenylsuccinanhydrid mit einem Oligo- oder Polyamin zur Reaktion bringt, wobei man das Polyisobutenylsuccinanhydrid entweder

(a) zuerst mit einem Alkohol oder Phenol und anschließend ohne Isolierung des Reaktionsprodukts mit dem Oligo- oder Polyamin umsetzt, oder
(d) das Polyisobutenylsuccinanhydrid in Gegenwart eines Alkohols oder Phenols mit dem Oligo- oder Polyamin umsetzt und
(e) gewünschtenfalls anschließend den Alkohol oder das Phenol entfernt.

**6.** Polyisobutenylsuccinimidprodukte aus Polyisobutenylsuccinanhydrid und einem Oligo- oder Polyamin mit einem Anteil des entsprechenden Polyisobutenylsuccinamids von nicht mehr als 30 Gew.%, vorzugsweise nicht mehr als 20 Gew.%, bezogen auf das Gesamtgewicht des Produkts.

**7.** Polyisobutenylsuccinimidprodukte aufgebaut aus

(a) Polyisobuten mit einem zahlengemittelten Molekulargewicht $M_n$ von 500 bis 10000 Dalton und einem Gehalt an endständigen Doppelbindungen von mehr als 50 Mol-%, vorzugsweise mehr als 75 Mol-%,
(b) Maleinsäureanhydrid und
(c) einem linearen, verzweigten, cyclischen oder cyclischen verzweigten Alkylenpolyamin mit 1 bis 10 C-Atomen in jeder Alkylengruppe und 2 bis 12 N-Atomen, von denen mindestens ein N-Atom als primäre Aminogruppe vorliegt, oder Mischungen davon,

mit einem Anteil von nicht mehr als 30 Gew.% des entsprechenden Polyisobutenylsuccinamids, bezogen auf das Gesamtgewicht des Produkts.

**8.** Polyisobutenylsuccinimidprodukte aufgebaut aus

(a) Polyisobuten mit einem zahlengemittelten Molekulargewicht $M_n$ von 500 bis 10000 Dalton und einem Gehalt an endständigen Doppelbindungen von mehr als 50 Mol-%, vorzugsweise mehr als 75 Mol-%,
(b) Maleinsäureanhydrid und
(c) einem oligo- oder Polyamin der allgemeinen Formel I:

$$H_2N\ (CH_2)_x\text{-}NH\text{-}[(CH_2)_y\text{-}NH]_z\text{-}(CH_2)_xNH_2 \qquad (I),$$

worin x und y unabhängig voneinander für eine ganze Zahl von 1 bis 5 stehen und z eine ganze Zahl von 0 bis 8 bedeutet, oder Mischungen davon, mit einem Anteil von nicht mehr als 30 Gew.% des entsprechenden Polyisobutenylsuccinamids, bezogen auf das Gesamtgewicht des Produkts.

**9.** Polyisobutenylbernsteinsäurehalbester-Zwischenprodukte aufgebaut aus

(a) Polyisobuten mit einem zahlengemittelten Molekulargewicht $M_n$ von 500 bis 10000 Dalton und einem Gehalt

an endständigen Doppelbindungen von mehr als 50 Mol-%, vorzugsweise mehr als 75 Mol-%,
(b) Maleinsäureanhydrid und
(c) Alkoholen der allgemeinen Formel ROH, worin R für geradkettiges oder verzweigtes, cyclisches oder verzweigt cyclisches Alkyl mit 1 bis 16 C-Atomen steht, oder Phenolen.

**10.** Polyisobutenylbernsteinsäurehalbester-Zwischenprodukte aufgebaut aus

(a) Polyisobuten mit einem zahlengemittelten Molekulargewicht $M_n$ von 500 bis 10000 Dalton und einem Gehalt an endständigen Doppelbindungen von mehr als 50 Mol-%, vorzugsweise mehr als 75 Mol-%,
(b) Maleinsäureanhydrid und
(c) 2-Ethylhexanol.

**11.** Verfahren zur Herstellung der Polyisobutenylbernsteinsäurehalbester-zwischenprodukte nach Anspruch 9 oder 10, durch Umsetzung von Polyisobuten mit Maleinsäure, Maleinsäureanhydrid oder einem funktionellen Derivat davon, **dadurch gekennzeichnet, dass** man das gebildete Polyisobutenylsuccinanhydrid mit dem Alkohol umsetzt.

**12.** Verwendung der Polyisobutenylbernsteinsäurehalbester-Zwischenprodukte nach den Ansprüchen 9 oder 10 im Verfahren nach einem der Ansprüche 1 bis 4.

**13.** Verwendung der Polyisobutenylsuccinimidprodukte nach einem der Ansprüche 5 bis 8 als Additive für Kraftstoffe, insbesondere Dieselkraftstoff, Heizöl, Kerosin und Ottokraftstoff, oder Schmiermittel.

**14.** Dieselkraftstoffadditivgemisch, enthaltend eine wirksame Menge an Polyisobutenylsuccinimidprodukten nach einem der Ansprüche 5 bis 8, sowie gegebenenfalls mindestens einen weiteren Zusatzstoff.

**15.** Dieselkraftstoffadditivgemisch nach Anspruch 14, enthaltend mindestens einen weiteren Zusatzstoff, ausgewählt unter Detergentien, Schmierfähigkeitsverbesserern, Korrosionsinhibitoren, Cetanzahlverbesserern, Demulgatoren, Antischaummitteln, Lösemitteln, Lösungsvermittlern, Antioxidantien, Metalldeaktivatoren, Deodorants.

**16.** Ottokraftstoffädditivgemisch, enthaltend eine wirksame Menge an Polyisobutenylsuccinimidprodukten nach einem der Ansprüche 5 bis 8, sowie gegebenenfalls mindestens einen weiteren Zusatzstoff.

**17.** Ottokraftstoffadditivgemisch nach Anspruch 16, enthaltend mindestens einen weiteren Zusatzstoff, ausgewählt unter Detergensadditiven, Trägerölen, Schmierfähigkeitsverbesserern, Lösungsmitteln, Korrosionsinhibitoren.

**18.** Schmiermittelzusammensetzung, enthaltend eine wirksame Menge an Polyisobutenylsuccinimidprodukten nach einem der Ansprüche 5 bis 8, sowie gegebenenfalls mindestens einen weiteren Zusatzstoff.

**19.** Schmiermittelzusammensetzung nach Anspruch 18, enthaltend mindestens einen weiteren Zusatzstoff, ausgewählt unter Schmierfähigkeitsverbesserern, Verschleißschutzadditiven, Korrosionsinhibitoren, VI-Verbesserern/Additiven.

## Claims

**1.** A process for the preparation of polyisobutenylsuccinimide products, in which a polyisobutene is reacted with maleic acid, maleic anhydride or a functional derivative thereof to give a polyisobutenylsuccinic anhydride and the polyisobutenylsuccinic anhydride is then reacted with an oligoamine or polyamine, wherein the polyisobutenylsuccinic anhydride is either

(a) first reacted with an alcohol or phenol and, without isolation of the reaction product, then with the oligoamine or polyamine, or
(b) the polyisobutenylsuccinic anhydride is reacted with the oligoamine or polyamine in the presence of an alcohol or phenol and
(c) if desired, the alcohol or the phenol is then removed.

**2.** The process according to claim 1, wherein the reaction with the alcohol or phenol is carried out at elevated temperatures, preferably at from 50 to 180°C, in particular from 80 to 160°C.

**3.** The process according to claim 1 or 2, wherein monohydric alcohols of the formula ROH, where R is straight-chain or branched, cyclic or branched cyclic alkyl of 1 to 16 carbon atoms, are used.

**4.** The process according to any of claims 1 to 3, wherein the oligoamines or polyamines used are those of the formula I:

$$H_2N(CH_2)_x\text{-}NH\text{-}[(CH_2)_y\text{-}NH]_z\text{-}(CH_2)_xNH_2 \qquad (I),$$

where x and y, independently of one another, are each an integer from 1 to 5 and z is an integer from 0 to 8, or mixtures thereof.

**5.** A polyisobutenylsuccinimide product obtainable by a process in which a polyisobutene is reacted with maleic acid, maleic anhydride or a functional derivative thereof to give a polyisobutenylsuccinic anhydride and the polyisobutenylsuccinic anhydride is then reacted with an oligoamine or polyamine, the polyisobutenylsuccinic anhydride either

(a) first being reacted with an alcohol or phenol and then, without isolation of the reaction product, with the oligoamine or polyamine, or
(d) the polyisobutenylsuccinic anhydride being reacted with the oligoamine or polyamine in the presence of an alcohol or phenol and
(e) if desired, the alcohol or the phenol then being removed.

**6.** A polyisobutenylsuccinimide product obtained from a polyisobutenylsuccinic anhydride and an oligoamine or polyamine, containing not more than 30, preferably not more than 20, % by weight, based on the total weight of the product, of the corresponding polyisobutenylsuccinamide.

**7.** A polyisobutenylsuccinimide product composed of

(a) polyisobutene having a number average molecular weight $M_n$ of from 500 to 10 000 Dalton and a content of terminal double bonds of more than 50, preferably more than 75, mol %
(b) maleic anhydride and
(c) a linear, branched, cyclic or cyclic branched alkylenepolyamine having 1 to 10 carbon atoms in each alkylene group and 2 to 12 nitrogen atoms, of which at least one nitrogen atom is present as a primary amino group, or mixtures thereof,

containing not more than 30% by weight, based on the total weight of the product, of the corresponding polyisobutenylsuccinamide.

**8.** A polyisobutenylsuccinimide product composed of

(a) polyisobutene having a number average molecular weight $M_n$ of from 500 to 10 000 Dalton and a content of terminal double bonds of more than 50, preferably more than 75, mol %
(b) maleic anhydride and
(c) an oligoamine or polyamine of the general formula I:

$$H_2N(CH_2)_x\text{-}NH\text{-}[(CH_2)_y\text{-}NH]_z\text{-}(CH_2)_xNH_2 \qquad (I),$$

where x and y, independently of one another, are each an integer from 1 to 5 and z is an integer from 0 to 8, or mixtures thereof, containing not more than 30% by weight, based on the total weight of the product, of the corresponding polyisobutenylsuccinamide.

**9.** A polyisobutenylsuccinic monoester intermediate composed of

(a) polyisobutene having a number average molecular weight $M_n$ of from 500 to 10 000 Dalton and a content of terminal double bonds of more than 50, preferably more than 75, mol %,
(b) maleic anhydride and
(c) alcohols of the formula ROH, where R is straight-chain or branched, cyclic or branched cyclic alkyl of 1 to 16 carbon atoms, or phenols.

**10.** A polyisobutenylsuccinic monoester intermediate composed of

(a) polyisobutene having a number average molecular weight $M_n$ of from 500 to 10 000 Dalton and a content of terminal double bonds of more than 50, preferably more than 75, mol %,
(b) maleic anhydride and
(c) 2-ethylhexanol.

**11.** A process for the preparation of the polyisobutenylsuccinic monoester intermediate according to claim 9 or 10 by reacting polyisobutene with maleic acid, maleic anhydride or a functional derivative thereof, wherein the polyisobutenylsuccinic anhydride formed is reacted with the alcohol.

**12.** The use of a polyisobutenylsuccinic monoester intermediate according to claim 9 or 10 in the process according to any of claims 1 to 4.

**13.** The use of a polyisobutenylsuccinimide product according to any of claims 5 to 8 as an additive for fuels, in particular diesel fuel, heating oil, kerosine and gasoline fuel, or lubricants.

**14.** A diesel fuel additive mixture, comprising an effective amount of a polyisobutenylsuccinimide product according to any of claims 5 to 8 and, if appropriate, at least one further additive.

**15.** The diesel fuel additive mixture according to claim 14, comprising at least one further additive selected from detergents, lubricity additives, corrosion inhibitors, cetane number improvers, demulsifiers, antifoams, solvents, solubilizers, antioxidants, metal deactivators and deodorants.

**16.** A gasoline fuel additive mixture, comprising an effective amount of a polyisobutenylsuccinimide product according to any of claims 5 to 8, and, if appropriate, at least one further additive.

**17.** The gasoline fuel additive mixture according to claim 16, comprising at least one further additive selected from detergent additives, carrier oils, lubricity additives, solvents and corrosion inhibitors.

**18.** A lubricant composition, comprising an effective amount of a polyisobutenylsuccinimide product according to any of claims 5 to 8, and, if appropriate, at least one further additive.

**19.** The lubricant composition according to claim 18, comprising at least one further additive selected from lubricity additives, antiwear additives, corrosion inhibitors and viscosity index improvers/additives.

## Revendications

**1.** Procédé de production de produits de polyisobuténylsuccinimide, dans lequel on transforme un polyisobutène avec de l'acide maléique, de l'anhydride d'acide maléique ou un dérivé fonctionnel de celui-ci en anhydride polyisobuténylsuccinique et l'anhydride polyisobuténylsuccinique est ensuite mis en réaction avec une oligo- ou polyamine, **caractérisé en ce qu'**on met en réaction l'anhydride polyisobuténylsuccinique soit :

(a) d'abord avec un alcool ou un phénol et, ensuite, sans isolation du produit réactionnel, avec l'oligo- ou la polyamine, ou
(b) en présence d'un alcool ou d'un phénol avec l'oligo- ou la polyamine et
(c) qu'on élimine éventuellement ensuite l'alcool ou le phénol.

**2.** Procédé selon la revendication 1, **caractérisé en ce que** la réaction avec l'alcool ou le phénol se déroule à une température élevée, de préférence 50 à 180 °C, en particulier 80 à 160 °C.

**3.** Procédé selon l'une des revendications 1 ou 2, **caractérisé en ce que** l'on utilise des alcools monovalents de formule générale ROH, dans laquelle R désigne un radical alkyle à chaîne droite ou ramifiée, cyclique ou cyclique ramifié avec 1 à 16 atomes C.

**4.** Procédé selon l'une des revendications 1 à 3, **caractérisé en ce que** l'on utilise comme oligo- ou polyamines celles de formule générale I :

$$H_2N(CH_2)_x\text{-}NH\text{-}[(CH_2)_y\text{-}NH)_z\text{-}\ (CH_2)_xNH_2 \qquad (I),$$

dans laquelle x et y désignent indépendamment l'un de l'autre un nombre entier de 1 à 5 et z un nombre entier de 0 à 8 ou leurs mélanges.

**5.** Produits de polyisobuténylsuccinimide obtenus par un procédé dans lequel on transforme un polyisobutène avec de l'acide maléique, de l'anhydride d'acide maléique ou un dérivé fonctionnel de celui-ci en anhydride polyisobuténylsuccinique et, ensuite, l'anhydride polyisobuténylsuccinique est mis en réaction avec une oligo- ou polyamine, auquel cas on met en réaction l'anhydride polyisobuténylsuccinique soit

(a) d'abord avec un alcool ou un phénol et, ensuite, sans isolation du produit réactionnel, avec l'oligo- ou la polyamine, ou
(d) en présence d'un alcool ou d'un phénol avec l'oligo- ou la polyamine et
(e) qu'on élimine éventuellement ensuite l'alcool ou le phénol.

**6.** Produits de polyisobuténylsuccinimide à partir d'anhydride polyisobuténylsuccinique et d'une oligo- ou polyamine avec une proportion du polyisobuténylsuccinamide correspondant de maximum 30 % en poids, de préférence maximum 20 % en poids par rapport au poids total du produit.

**7.** Produits de polyisobuténylsuccinimide composés :

(a) de polyisobutène d'un poids moléculaire en moyenne numérique $M_n$ de 500 à 10 000 Dalton et une teneur en doubles liaisons en fin de chaîne de plus de 50 % en mole, de préférence de plus de 75 % en mole,
(b) d'anhydride d'acide maléique et
(c) d'une alkylènepolyamine linéaire, ramifiée, cyclique ou cyclique ramifiée avec 1 à 10 atomes C dans chaque groupe alkylène et 2 à 12 atomes N dont au moins un atome N est présent sous forme de groupe amino primaire, ou de mélanges de celle-ci,

avec une proportion de maximum 30 % en poids du polyisobuténylsuccinamide correspondant par rapport au poids total du produit.

**8.** Produits de polyisobuténylsuccinimide composés :

(a) de polyisobutène avec un poids moléculaire en moyenne numérique $M_n$ de 500 à 10 000 Dalton et une teneur en doubles liaisons en fin de chaîne de plus de 50 % en mole, de préférence de plus de 75 % en mole,
(b) d'anhydride d'acide maléique et
(c) d'une oligo- ou polyamine de formule générale I :

$$H_2N(CH_2)_x\text{-}NH\text{-}[(CH_2)_y\text{-}NH]_z - (CH_2)_xNH_2 \qquad (I),$$

dans laquelle x et y désignent indépendamment l'un de l'autre un nombre entier de 1 à 5 et z un nombre entier de 0 à 8 ou de ses mélanges, avec une proportion de maximum 30 % en poids du polyisobuténylsuccinamide correspondant par rapport au poids total du produit.

**9.** Produits intermédiaires de semi-ester d'acide polyisobuténylsuccinique composés :

(a) de polyisobutène avec un poids moléculaire en moyenne numérique $M_n$ de 500 à 10 000 Dalton et une teneur en doubles liaisons en fin de chaîne de plus de 50 % en mole, de préférence de plus de 75 % en mole,
(b) d'anhydride d'acide maléique et
(c) d'alcools de formule générale ROH dans laquelle R désigne un radical alkyle à chaîne droite ou ramifiée, cyclique ou cyclique ramifié avec 1 à 16 atomes C ou de phénols.

**10.** Produits intermédiaires de semi-ester d'acide polyisobuténylsuccinique composés :

(a) de polyisobutène avec un poids moléculaire en moyenne numérique $M_n$ de 500 à 10 000 Dalton et une teneur en doubles liaisons en fin de chaîne de plus de 50 % en mole, de préférence de plus de 75 % en mole,
(b) d'anhydride d'acide maléique et
(c) de 2-éthylhexanol.

**11.** Procédé de production de produits intermédiaires de semi-ester d'acide polyisobuténylsuccinique selon l'une des revendications 9 ou 10 par transformation de polyisobutène avec de l'acide maléique, de l'anhydride d'acide maléique ou un dérivé fonctionnel de celui-ci, **caractérisé en ce que** l'anhydride polyisobuténylsuccinique formé est mis en réaction avec l'alcool.

**12.** Utilisation de produits intermédiaires de semi-ester d'acide polyisobuténylsuccinique selon l'une des revendications 9 ou 10 dans le procédé selon l'une des revendications 1 à 4.

**13.** Utilisation de produits de polyisobuténylsuccinimide selon l'une des revendications 5 à 8 comme additifs pour carburants, en particulier pour carburant diesel, mazout de chauffage, kérosène, essence ou lubrifiant.

**14.** Mélange additif pour diesel contenant une quantité active de produits de polyisobuténylsuccinimide selon l'une des revendications 5 à 8 ainsi qu'éventuellement au moins un additif supplémentaire.

**15.** Mélange additif pour diesel selon la revendication 14, contenant au moins un additif supplémentaire, sélectionné parmi les détergents, les agents améliorant le pouvoir lubrifiant, les inhibiteurs de corrosion, les agents améliorant l'indice de cétane, les désémulsifiants, les agents antimousse, les solvants, les agents solubilisants, les antioxydants, les désactivateurs métalliques et les déodorants.

**16.** Mélange additif pour essence contenant une quantité active de produits de polyisobuténylsuccinimide selon l'une des revendications 5 à 8, ainsi qu'éventuellement au moins un additif supplémentaire.

**17.** Mélange additif pour essence selon la revendication 16, contenant au moins un additif supplémentaire, sélectionné parmi les additifs détergents, les huiles porteuses, les agents améliorant le pouvoir lubrifiant, les solvants et les inhibiteurs de corrosion.

**18.** Composition lubrifiante, contenant une quantité active de produits de polyisobuténylsuccinimide selon l'une des revendications 5 à 8, ainsi qu'éventuellement au moins un additif supplémentaire.

**19.** Composition lubrifiante selon la revendication 18, contenant au moins un additif supplémentaire sélectionné parmi les agents améliorant le pouvoir lubrifiant, les additifs de protection contre l'usure, les inhibiteurs de corrosion, les agents/additifs améliorant l'IV.